# EUROPÄISCHE PATENTSCHRIFT

(11) **EP 1 205 741 B1**
(45) Veröffentlichungstag und Bekanntmachung des Hinweises auf die Patenterteilung: **15.02.2006**
(21) Anmeldenummer: 01123918.3
(22) Anmeldetag: 06.10.2001
(51) Int. Cl.: G01M 3/20

(54) **Leckdetektorpumpe mit Ventilkörpern im Gehäuse**
Leak detection pump with valve bodies in the housing
Pompe de détection de fuite avec des corps de soupape dans la boîte

(30) Priorität: 07.11.2000 DE 10055057
(43) Veröffentlichungstag der Anmeldung: 15.05.2002
(73) Patentinhaber: Pfeiffer Vacuum GmbH, 35614 Asslar (DE)
(72) Erfinder: Abbel, Karl, 35619 Braunfels (DE)

(56) Entgegenhaltungen:
- EP-A- 0 990 886
- WO-A-00/45144
- GB-A- 1 170 833
- US-A- 4 459 844
- US-A- 5 134 877

## Beschreibung

Die Erfindung beschreibt eine Leckdetektorpumpe nach dem Oberbegriff des 1. Anspruches.

Zur Feststellung von Lecks in Vakuumkammern und anderen, zu einem Vakuumsystem gehörenden Behältern, wie z. B. Pumpenräume, Verbindungselemente, Ventile, Messsysteme u. a., werden Lecksucheinrichtungen verschiedener Art verwendet. Im Bereich der Vakuumtechnik sind im allgemeinen Einrichtungen im Einsatz, mit denen Leckstellen durch von außen eindringendes Prüfgas und dessen Registrierung mit einem Gasdetektor aufgefunden werden. Als Gasdetektoren werden vorzugsweise Massenspektrometer eingesetzt, die als Gasanalysatoren die Partialdrücke eines Gasgemisches messen und so geringste Mengen eines Prüfgases feststellen können.

Zur schnellen und präzisen Lokalisierung von Lecks wird neben einem Gasdetektor ein Evakuierungssystem, bestehend aus einer Hochvakuumpumpe, einer oder mehreren Vorvakuumpumpen und einem System von Verbindungsleitungen und Ventilen benötigt. Als Hochvakuumpumpe haben sich Turbomolekularpumpen, welche in den meisten dieser Anwendungsfälle nach dem Gegenstrombetrieb betrieben werden, bewährt. Solche Systeme werden z. B. in den DE-OS 16 48 648, DE-OS 31 24 205 und US 55 61 240 beschrieben. Der Aufbau der bisher bekannten Lecksuchsysteme ist sehr komplex. Die hauptsächlichen Bestandteile sind neben dem Gasdetektor u.a. mehrere Vakuumpumpen, Verbindungselemente, Ventile, Messgeräte und Dichtelemente. Alle die einzelnen Bauteile werden zu einem Lecksuchsystem montiert.

Die US 5,134;877 schlägt vor, die vorgenannten Komponenten unverändert zu belassen, aber in einem kofferartigen Behälter anzuordnen und somit ein tragbares Leckdetektorsystem zu schaffen.

Ein solcher komplexer Aufbau bringt eine Menge Nachteile mit sich, die sich zunächst nach außen hin durch großes und sperriges Volumen und hohes Gewicht bemerkbar machen. Dadurch treten Behinderungen im praktischen Einsatz auf, besonders, wenn vielseitig und schnell einsetzbare sowie leicht transportable Geräte gefordert sind. Während des Betriebes müssen Saugvermögensreduzierungen und somit längere Pumpzeiten, lange Ansprechzeiten und geringe Empfindlichkeiten durch komplizierte Gasführung, Dichtprobleme durch die große Anzahl von lösbaren Verbindungsstellen und dadurch auch Fehlermöglichkeiten bei der Messmethode durch Permeation des Prüfgases von außen nach innen und alle Probleme und Unsicherheiten, welche bei einem System, bestehend aus vielen Einzelteilen, auftreten, in Kauf genommen werden. Wartungs- und Reparaturarbeiten tragen dazu bei, Aufwand und Betriebskosten zu erhöhen.

Der Erfindung liegt die Aufgabe zugrunde, diese Nachteile weitgehend zu beseitigen oder zu reduzieren. Es soll ein System zur Lecksuche vorgestellt werden, welches einfacher im Aufbau und somit kostengünstiger, besser geeignet für einen schnellen und wendigen Einsatz und im Betrieb effektiver und sicherer ist.

Die Aufgabe wird durch die Merkmale des 1. Anspruches gelöst. Die Ansprüche 2 - 4 stellen weitere Ausgestaltungsformen der Erfindung dar.

Durch die erfindungsgemäße Anordnung wird ein Pumpsystem zur Lecksuche in Form einer Leckdetektorpumpe vorgestellt, welches einfacher im Aufbau ist und somit ein kompakteres Volumen und geringeres Gewicht aufweist als herkömmliche Systeme. Die Herstellkosten werden dadurch verringert. Das System ist vielseitig und schnell einsetzbar. Saugvermögensreduzierungen durch ein komplexes Leitungssystem werden vermieden und die Empfindlichkeit wird gesteigert. Das Problem der Permeation des Prüfgases von außen nach innen und somit Unsicherheiten in der Messmethode ist weitgehend reduziert. Ein weiterer Vorteil ist eine Verringerung von Wartungs- und Reparaturarbeiten.

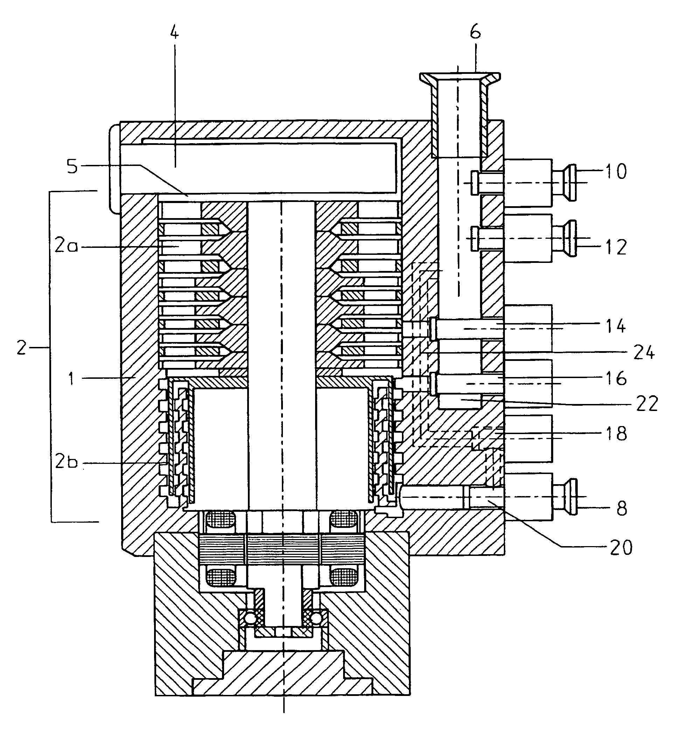

Anhand der Abbildung soll die Erfindung näher erläutert werden.

Im Gehäuse 1 ist im vorliegenden Beispiel als Hochvakuumpumpe 2 eine Kombination aus Turbomolekularpumpe 2a und Holweckpumpe 2b vorgesehen. Diese Pumpenkombination kann durch weitere unterschiedliche Pumpsysteme, wie z. B. eine Seitenkanalpumpe, ergänzt werden. Dadurch wird ein Ausstoßen nach höheren Vorvakuumdrücken bis hin zum Atmosphärendruck möglich. Auf der Hochvakuumseite der Turbomolekularpumpe schließt direkt der Gasanalysator 4 an. Dieser ist ebenfalls im Gehäuse 1 untergebracht oder kann wahlweise als separates Bauteil mit der Ansaugseite 5 der Hochvakuumpumpe verbunden sein. Auf der Seite nach höherem Druck hin befindet sich die Gasaustrittsöffnung 8, welche entweder über eine Vorvakuumpumpe oder direkt zur Atmosphäre führt. Zum Gehäuse gehören ebenfalls der Anschluss 6 für den Prüfling sowie weitere Anschlüsse 10 und 12 zum Einlass von Gasen zu unterschiedlichen Zwecken (z. B. Spülen oder Fluten) und Ventilkörper 14, 16, 18, 20 zur Steuerung der Gasströme entsprechend den unterschiedlichen Betriebszuständen der Leckdetektorpumpe. Verbindungen, z. B. 22 und 24, welche zur Gasführung während der unterschiedlichen Betriebsbedingungen notwendig sind, befinden sich ebenfalls im Gehäuse.

Im Folgenden werden einige Betriebszustände der Leckdetektorpumpe aufgeführt. In den einzelnen Betriebszuständen sind die jeweils genannten Ventile geöffnet und alle anderen geschlossen. An der Gasaustrittsöffnung ist eine Vorvakuumpumpe angeschlossen.
- Ventil 18 auf: Evakuierung des Prüflings
- Ventil 20 auf: Evakuierung des Analysators und der Hochvakuumpumpe
- Ventil 14 u. 20 auf: Verbindung vom Prüfling zum Analysator über die Hochvakuumpumpe für kleine Lecks (hohe Empfindlichkeit)
- Ventil 16 u. 20 auf: Verbindung vom Prüfling zum Analysator über die Hochvakuumpumpe für große Lecks (niedrige Empfindlichkeit)
- Ventile 10, 14 u. 20 auf: Einlass von Testgas über den Anschluss 10 zur Kalibrierung
- Ventil 12 auf: Belüftung des Prüflings über Anschluss 12

## Patentansprüche

1. Leckdetektorpumpe mit einem Gehäuse (1), im wesentlichen bestehend aus den Komponenten Hochvakuumpumpe (2), Gasanalysator (4), Anschluss (6) für einen Prüfling, Gasaustrittsöffnung (8), Gaseinlassanschlüssen (10, 12), Ventilkörpern (14, 16, 18, 20), Verbindungen (22, 24) zur Gasführung zwischen diesen Komponenten,
**dadurch gekennzeichnet, dass**
mindestens die Ventilkörper (14, 16, 18, 20) und die Verbindungen (22, 24) Bestandteil des Gehäuses (1) sind, welches die Hochvakuumpumpe (2) und den Anschluss (6) für den Prüfling beinhaltet.

2. Leckdetektorpumpe nach Anspruch 1, **dadurch gekennzeichnet, dass** der Gasanalysator (4) als separates Bauteil mit der Ansaugseite der Hochvakuumpumpe (2) verbunden ist.

3. Leckdetektorpumpe nach Anspruch 1 oder 2, **dadurch gekennzeichnet, dass** die Hochvakuumpumpe (2) als Turbomolekularpumpe ausgebildet ist.

4. Leckdetektorpumpe nach einem der vorangehenden Ansprüche, **dadurch gekennzeichnet, dass** die Hochvakuumpumpe eine Compoundpumpe ist und aus mindestens zwei verschiedenen Pumpsystemen (2a, 2b) besteht.

## Claims

1. Leak detection pump with a housing (1), essentially comprising the components high-vacuum pump (2), gas analyser (4), connection (6) for an item to be inspected, gas outlet (8), gas inlet connections (10, 12), valve bodies (14, 16, 18, 20), connections (22, 24) for carrying gas between these components,
**characterised in that**
at least the valve bodies (14, 16, 18, 20) and the connections (22, 24) are a component part of the housing (1), which contains the high-vacuum pump (2) and the connection (6) for the item to be inspected.

2. Leak detection pump according to Claim 1, **characterised in that** the gas analyser (4) is connected as a separate structural part to the intake side of the high-vacuum pump (2).

3. Leak detection pump according to Claim 1 or 2, **characterised in that** the high-vacuum pump (2) is configured as a turbo-molecular pump.

4. Leak detection pump according to one of the preceding claims, **characterised in that** the high-vacuum pump is a compound pump and comprises at least two different pump systems (2a, 2b).

## Revendications

1. Pompe à détecteur de fuites comportant un carter (1) et constituée essentiellement d'une pompe à vide poussé (2), d'un analyseur de gaz (4), d'un raccord (6) pour un échantillon, d'une ouverture de sortie de gaz (8), de raccords d'admission de gaz (10, 12), de corps de soupapes (14, 16, 18, 20), de jonctions (22, 24) pour la conduite du gaz entre ces composants, **caractérisée en ce qu'**au moins les corps de soupapes (14, 16, 18, 20) et les jonctions (22, 24) font partie intégrante du carter (1) qui renferme la pompe à vide poussé (2) et le raccord (6) pour l'échantillon.

2. Pompe à détecteur de fuites selon la revendication 1, **caractérisée en ce que** l'analyseur de gaz (4) est connecté, en tant que composant séparé, au côté d'admission de la pompe à vide poussé (2).

3. Pompe à détecteur de fuites selon la revendication 1 ou 2, **caractérisée en ce que** la pompe à vide poussé (2) est réalisée en tant que pompe turbomoléculaire.

4. Pompe à détecteur de fuites selon l'une quelconque des revendications précédentes, **caractérisée en ce que** la pompe à vide poussé (2) est une pompe mixte composée d'au moins deux systèmes de pompage (2a, 2b) différents.
